Europäisches Patentamt

European Patent Office

Office européen des brevets

(19)

(11) EP 1 694 088 A1

(12) **EUROPEAN PATENT APPLICATION**

(43) Date of publication:
23.08.2006 Bulletin 2006/34

(51) Int Cl.:
*H04Q 7/38* (2006.01)    *H04L 12/28* (2006.01)

(21) Application number: 05290415.8

(22) Date of filing: 22.02.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **ALCATEL**
**75008 Paris (FR)**

(72) Inventors:
  • **Conte, Alberto**
    **75014 Paris (FR)**

• **Casetti, Claudio**
  **10139 Torino (IT)**
• **Dauchy, Philippe**
  **75014 Paris (FR)**
• **Chiasserini, Carla-Fabiana**
  **10139 Torino (FR)**

(74) Representative: **Brose, Gerhard et al**
    **Alcatel,**
    **Intellectual Property Group, Stuttgart**
    **70430 Stuttgart (DE)**

(54) **A method for admission control for mobile networks, an admission controller and a communication system therewith**

(57)    The invention concerns a method for providing admission control for the admission of a mobile terminal (STA2) to a mobile network, whereby said admission control is based on at least one parameter (APP) that characterizes the radio channel that shall be used for a connection of the mobile terminal (STA2) to the mobile network and on at least one parameter (STAP) that characterizes the traffic flow of said connection, an admission controller (AC) and a communication system therewith.

Fig. 1

**EP 1 694 088 A1**

**Description**

The invention relates to a method for providing admission control for the admission of a mobile terminal to a mobile network according to the preamble of claim 1, an admission controller according to the preamble of claim 6 and a communication system according to the preamble of claim 8.

The IEEE 802.11e standard provides Quality of Service (QoS) capabilities to Wireless Local Area Network (WLAN) systems by supporting traffic differentiation by means of Enhanced Distributed Channel Access (EDCA) mechanism, time-division multiplexing by means of Hybrid coordination function Controlled Channel Access (HCCA) mechanism, and means to request, release or modify network resources. The set of IEEE 802.11e tools promises to allow or ease the deployment of QoS-sensitive real-time and interactive services like Voice over Internet Protocol (VoIP) telephony and video streaming.

On the other hand, also admission control is a key building piece for QoS support. It is used to control network resources for QoS-constrained traffic. The admission control function accepts or rejects resource reservation requests based on network resource availability.

Unfortunately, while defining the messages to request, release or modify network resources, the IEEE 802.11e standard does not define a complete admission control mechanism, comprehensive of decision algorithm and means to estimate channel utilization.

Currently there are only either best effort solutions, which provide no QoS support, like in legacy IEEE 802.11a/b/g WLAN systems, or non-controlled solutions based on traffic differentiation using e.g. EDCA mechanisms, for the access to the network resources available.

In case of solutions based on traffic differentiation like e.g. EDCA mechanisms, the network resources are used by the terminals without control. The use of priorities brings effective traffic differentiation (e.g. voice with higher priority than web traffic), but the lack of resource control does not protect such solutions from network, i.e. radio channel, saturation. The main problem is, that a newly activated traffic flow, e.g. a voice call, can impact all already existing (active) streams like e.g. voice calls by degrading the overall satisfaction of the full set of users/customers of the WLAN system.

In the patent application EP 1 244 318 A1, there is a method disclosed for granting access to a network e.g. when access is requested by a mobile station for starting a new service. In this method, a threshold as an indication for the availability of resources for new services is set depending on measured quality of service and depending on a predetermined target quality of service.

In the patent application EP 1 079 650 A2, there is a method disclosed for a call admission control in which in particular by means of the frame error rate, the decision is taken whether a session is admitted or denied access. Therefor, an estimate of a frame error rate which would result should a requested session be admitted is made, and by means of a comparison with a target value for the frame error rate, the session is admitted or denied access. This application is regarded as the closest prior art.

The object of the invention is to propose a solution for providing admission control for the admission of a mobile terminal to a mobile network.

This object is achieved by a method according to the teaching of claim 1, an admission controller according to the teaching of claim 6 and a communication system according to the teaching of claim 8.

The main idea of the invention is to use a measurement-based admission control that can be applied e.g. to IEEE 802.11e EDCA-enhanced WLAN systems. The proposed solution can be combined with the QoS capabilities introduced by the IEEE 802.11e standard, that provide to mobile terminals the means to reserve and release radio resources as well as to modify them. The solution is based on the measurement of some important metrics characterizing the radio channel, as specified e.g. by the IEEE 802.11k/D1.2 draft standard.

The resource reservation request, i.e. the so-called ADDTS request message (ADDTS = Add Traffic Stream) sent from a mobile terminal to an access point, contains traffic specifications like e.g. the nominal MSDU size (MSDU = MAC Service Data Unit), the mean data rate or the minimum PHY rate (PHY = Physical Layer).

The admission control decision is concentrated into a functional admission controller, responsible to execute the Channel Admission Control (CAC) algorithm. The admission controller can reside e.g. in a so-called fat access point or in a Wireless Network Controller (WNC). In the following the admission controller will be described as external to the access point, in order to explicitly detail the communication between the access point and the admission controller. In case of colocated access points and admission controller, such communication is internal.

The CAC algorithm takes as input the traffic specifications (TSPEC) describing the to-be-admitted flow, i.e. the so-called TSPEC element, combines it with the measured network load information, i.e. the current channel utilization, and decides whether or not the flow can be admitted without impacting the performance of already admitted flows.

Briefly, the channel admission control process can be described in the following way:

The access point measures the channel utilization $U_{meas}$ during the time period of a so-called measurement window (MW). Then, it provides this information to the admission controller, as input for the CAC algorithm.

The admission controller uses the channel utilization and has initial values to build its own internal view of the channel utilization that is called current channel utilization $U_{curr}$:

$$U_{meas} \implies U_{curr}$$

When the admission controller receives a resource reservation request, i.e. an ADDTS request message, from a mobile terminal, it computes the increase in utilization of the channel requested by the new flow $U_{add}$ as the synthesis of the flow characteristics specified in the TSPEC element:

$$TSPEC \implies U_{add}$$

The admission controller combines the current channel utilization $U_{curr}$ with the calculated increment of the channel utilization that is called additional channel utilization $U_{add}$ to get the (theoretical) new channel utilization $U_{new}$, as if the new flow was already admitted:

$$U_{new} = U_{curr} + U_{add}$$

The admission controller takes the admission decision by checking if $U_{new}$ does not exceed a given target channel utilization $U_{target}$, i.e. the maximum acceptable channel utilization. If $U_{ew}$ is smaller than $U_{target}$, the new flow is admitted, otherwise it is rejected:

$$U_{new} < U_{target} ? \implies Decision$$

When a flow is admitted, the admission controller updates its internal view of the channel utilization, i.e. the current channel utilization $U_{curr}$, in order to account for the increase in the channel utilization due to the newly admitted flow:

$$U_{curr} = U_{new}$$

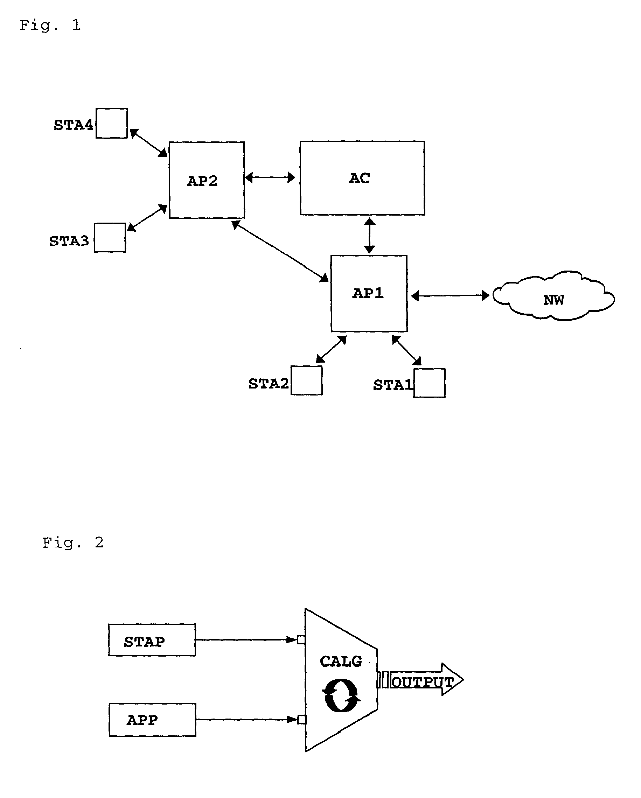

Further developments of the invention can be gathered from the dependent claims and the following description.
In the following the invention will be explained further making reference to the attached drawings.
Fig. 1 schematically shows a communication system with several mobile terminals, two access points and one admission controller for carrying out a method for providing admission control for the admission of a mobile terminal to a mobile network according to the invention.
Fig. 2 schematically shows the principle mechanism of the CAC algorithm that is used to carry out a method for providing admission control according to the invention.
A communication system according to the invention is depicted in fig. 1 and comprises a mobile network that in turn comprises at least one access point AP1, at least two mobile terminals STA1 and STA2 and at least one admission controller AC. In the example described hereafter by means of fig. 1, there are comprised two access points AP1 and AP2 and four mobile terminals STA1 - STA4. Preferably, said communication system additionally comprises at least one connection to a network NW like e.g. the Internet or another mobile network.
The access points AP1 and AP2 are connected to each other e.g. via a backbone system and at least the mobile terminal STA1 is connected to the access point AP1 via a wireless connection. Additionally, the access points AP1 and AP2 are both connected to the access controller AC via a fixed or wireless connection. The mobile terminal STA1 that is connected via a wireless connection to the access point AP1 can by means of the backbone system be further connected via the further access point AP2 to one of the mobile terminals STA3 or STA4 within the same mobile network. Furthermore, this mobile terminal STA1 can also be connected by means of the backbone system and via gateways to devices like e.g. terminals or servers located in a further network NW like e.g. the Internet or another mobile network.

The access points AP1 and AP2 comprise the functionality of an access point of a mobile network, i.e. they provide the possibility for mobile terminals to get connected to a mobile network. Furthermore, the access points AP1 and AP2 comprise means for sending admission requests that are originated by a mobile terminal STA1 - STA4 to the admission controller AC and means for receiving admission responses from the admission controller AC.

The mobile terminals STA1 - STA4 comprise the functionality of a mobile terminal for a mobile network, i.e. they can be connected to a mobile network by means of an access point AP1 or AP2. Particularly, the mobile terminals STA1 - STA4 comprise means for sending admission requests to the access points AP1 or AP2 and for receiving admission responses from the access points API or AP2.

The admission controller AC according to the invention comprises means for receiving admission requests for the admission of a mobile terminal STA1 - STA4 to the mobile network, for receiving parameters that characterize the radio channel that shall be used for a connection of the mobile terminal STA1 - STA4 to the mobile network, for receiving parameters that characterize the traffic flow of said connection, for controlling the admission based on at least one of said parameters that characterize the radio channel that shall be used for a connection of the mobile terminal STA1 - STA4 to the mobile network and on at least one of said parameters that characterize the traffic flow of said connection and for sending a response concerning the admission request towards the mobile terminal STA1 - STA4.

In the following, by way of example the method according to the invention is described in detail making reference to figs. 1 and 2.

The proposed method for providing channel admission control (CAC) is implemented in a WLAN system according to the IEEE 802.11e standard and is based on the following assumptions and initial considerations:

- The mobile terminal STA2 requests a new traffic flow by means of sending a so-called ADDTS request message specifying the so-called TSPEC element to the access point AP1 which in turn forwards the ADDTS request message to the admission controller AC. The TSPEC element shall include, at least, the following parameters: The nominal MSDU size, the required mean data rate $R_r$, the required minimum PHY rate, and the requested EDCA access category, which is specified in the so-called TS info field. Note that the TSPEC element could also specify the required minimum data rate, which is not essential to the proposed CAC algorithm, but useful to give to a mobile terminal the possibility to renegotiate the desired QoS level when admission is not possible with the current QoS requirements. The ADDTS request message and the TSPEC element are both defined in IEEE 802.11e standard.

- The so-called surplus bandwidth allowance explained below is a TSPEC field supposed to be filled by the mobile terminal STA2. However, due to its extremely complicated computation, it is very unlikely, although not impossible, that the mobile terminal STA2 can compute it. In case the surplus bandwidth allowance is not provided by the mobile terminal STA2, the admission controller AC shall compute it, using the algorithm defined here:

    Draft Supplement to Standard For Telecommunications and Information Exchange Between Systems - LAN/MAN Specific Requirements - Part 11: Wireless Medium Access Control (MAC) and Physical Layer (PHY) specifications: Medium Access Control (MAC) Enhancements for Quality of Service (QoS), IEEE Standard 802.11e D0.8.

    Alternatively, the surplus bandwidth allowance could be computed by the access point AP1 and provided to the admission controller AC. However, this does not seem to be a good solution. In fact, in this case, the access point AP1 must be able to intercept ADDTS request frames, interpret them, compute the surplus bandwidth allowance on the fly, insert it into a new ADDTS request message and forward it to the admission controller AC.

- The metrics of interest are computed over a measurement window *(MW)* with the duration of the time period $T_w$ depending on traffic load and throughput. They are expressed in number of observed successful accesses $W_A$, i.e. successful transmitted packets, instead of in seconds. This number of successful transmitted packets $W_A$ can be measured by the access point AP1 based on the total number of transmitted and received acknowledgements ACK. This method has the advantage to avoid lack of data in the case of low traffic and an excessive latency in the case of high load or load spikes.

In a basic embodiment of the invention, only one class of service, i.e. only one so-called EDCA access category, is defined in the so-called QoS basic service set (QBSS) of the system. Despite such simplification, the description details precisely and completely the chosen approach. The useful parameters will be presented, as well as the metrics measured by the access point AP1 and the ones computed by the admission controller AC. Finally the admission control algorithm itself is detailed.

The following definitions of useful static parameters are introduced to the CAC algorithm proposal:

- The maximum packet drop probability $p_{drop}$ represents the maximum probability of any packet to be dropped in the radio channel, i.e. the probability that the packet fails to be received within a so-called delay bound. This value is necessary to compute the surplus bandwidth allowance. It is assumed to use a pre-configured value, fixed as a static parameter for the entire basic service set (BSS), i.e. for the admission controller AC. The IEEE 802.11e standard specification proposes to use a value of $p_{drop}$ = $10^{-8}$.

- The target channel utilization $U_{target}$ represents the target value of utilization that the admission controller AC wants to achieve and that shall not be exceeded within its controlled QoS basic service set. By definition, the value of $U_{target}$ is smaller than 1. The parameter $U_{target}$ is a configurable parameter that can be tuned to adjust the inherent inaccuracy of the CAC algorithm.

In fig. 2, the principle mechanism of the CAC algorithm CALG according to the invention that can be implemented e.g. in the admission controller AC is depicted. The mobile terminal STA2 delivers to the CAC algorithm CALG the parameters STAP that characterize the traffic flow of the connection from the mobile terminal STA2 to the mobile network and that can be comprised e.g. in the TSPEC element. Furthermore, the access point AP1 delivers to the CAC algorithm CALG the parameters APP that characterize the radio channel that shall be used for the connection, like e.g. information about the radio channel utilization. The result OUTPUT of the CAC algorithm CALG comprises e.g. a decision whether or not the traffic flow is admitted and instructions concerning the access of the mobile terminal STA2 to the radio channel. The result OUTPUT is sent from the admission controller AC in which the CAC algorithm CALG is implemented to the mobile terminal STA2.

In the following, the measurements performed by the access point AP1 that lead to the parameters APP that are provided to the admission controller AC as input for the CAC algorithm CALG are described. As already mentioned, the measured metrics of interest are computed over the time period $T_W$ of a measurement window (MW) that is depending on traffic load and throughput and expressed in number of observed successful accesses $W_A$, i.e. successful transmitted packets, instead of in seconds.

- The packet loss probability $p_1$ represents the probability to lose a packet over the wireless medium. It can be derived using both the average packet error probability over the radio channel denoted by $p_e$, which can be easily estimated by the access point AP1, and the collision probability denoted by $p_c$, which can be estimated using the following formula:

$$p_c = 1 - \left(1 - \frac{1}{CW_{min}}\right)^{N-1}$$

In this formula, $CW_{min}$ denotes the so-called minimum contention window size and N denotes the number of active mobile terminals in a collision domain, i.e. there are N mobile terminals within the transmission range of each other that have data to send.

A packet is lost over the wireless medium whether if it collides or if it suffers from an error on the radio channel. Then, $p_1$ is given by this equation:

$$p_1 = p_e + p_c - p_e p_c$$

The packet loss probability $p_1$ is used by the admission controller AC to compute the surplus bandwidth allowance described below.

- The measured channel utilization $U_{meas}$ provides an indication of the system load level. $U_{meas}$ is one of the main metrics to be measured by the access point AP1. Theoretically it is given by this formula:

$$U_{meas} = 1 - \frac{T_I}{T_w} = \frac{T_B}{T_w}$$

In this formula, $T_r$ denotes the channel idle time and $T_B$ denotes the channel busy time.

From a practical standpoint, $U_{meas}$ can be derived by the access point AP1 from channel observation, as specified in IEEE 802.11k standard specification. According to the section 11.7.7.6 of the IEEE 802.11k standard specifying the radio resource measurement in 802.11 WLAN networks, the access point AP1 performs the following measurements:

o The CCA (CCA = clear channel assessment) idle histogram, i.e. the histogram of the time intervals during which the PHY clear channel assessment detected an idle medium;

o The CCA busy histogram, i.e. the histogram of the time intervals during which the PHY clear channel assessment detected a busy medium;

o The NAV (NAV = network allocation vector) busy histogram, i.e. the histogram of the time intervals during which the NAV value was set to a positive value.

It must be highlighted that from the CCA histograms it is possible to derive the minimum, maximum and average idle and busy time of the channel during the measurement window. One such histogram, e.g. the CCA busy histogram, might report the probability density function (pdf) denoted b(x) of the number of consecutive busy slots x. From it, the average number of busy slots $E(B)$ can be computed in the following way:

$$E[B] = \sum_{x=0}^{\infty} x \cdot b(x)$$

The average number of idle slots $E[I]$ can be computed in a similar way from the CCA idle histogram. The measured channel utilization $U_{meas}$ can then be computed using the following formula:

$$U_{meas} = \frac{E[B]}{E[B] + E[I]}$$

The latter formula is a practical computation of the measured channel utilization $U_{meas}$.

The measured channel utilization is measured/computed during the time period of a measurement window and provided to the admission controller AC to be used in the CAC algorithm during the next measurement window.

To perform admission control, the admission controller AC computes a number of metrics. The input data used for this computation are provided by both the access point AP1 and the mobile terminal STA2 involved in the process. The access point AP1 provides to the admission controller AC the parameters APP that characterize the radio channel that shall be used for the connection like e.g. the measured channel utilization $U_{meas}$, the packet loss probability $p_1$ and the duration of the measurement window denoted $T_w$. The mobile terminal STA2 provides to the admission controller AC by means of the ADDTS request message the parameters STAP that characterize the traffic flow of the connection from the mobile terminal STA2 to the mobile network, i.e. the description of the to be admitted flow comprised e.g. in the TSPEC element.

The metrics computed by the admission controller AC are listed and described below:

• The number of expected accesses A to the mobile network that the requesting mobile terminal STA2 would have attempted if it had been active during the past measurement window of duration $T_w$ is computed by the admission controller AC by means of the following formula:

$$A = \left( \frac{R_{min}}{S_{MSDU}} \cdot T_w \right)$$

In this formula, $R_{min}$ denotes the minimum data rate of the new flow and $S_{MSDU}$ denotes the nominal MSDU size. These two values are specified in the TSPEC element carried by the ADDTS request message, and the duration of the past measurement window $T_w$ is provided by the access point AP1.
The number of expected accesses A will then be used for the computation of the so-called surplus bandwidth allowance, as will be explained below.

- The medium time parameter $T_M$ is defined by the IEEE 802.11e standard and represents the time for the channel utilization of a single flow. It can be derived by the admission controller AC from the flow characteristics specified in the TSPEC element. The medium time $T_M$ can be obtained in the following way:

$$T_M = SBA \cdot \left( \frac{R_r}{S_{MSDU}} \right) \cdot T_F$$

In this formula,

o $R_r$ is the required mean data rate as specified in the TSPEC element,

o The nominal MSDU size $S_{MSDU}$ is also specified by the requesting mobile terminal STA2 in the TSPEC element carried in the ADDTS request frame,

o The frame exchange time $T_F$ is given by the transmission time of a frame at the minimum PHY rate of the mobile terminal, plus the so-called short interframe space (SIFS) time interval and the acknowledgement (ACK) transmission time,

o The surplus bandwidth allowance factor *SBA* specifies the excess allocation of time used to bound the number of dropped packets of the application. This value accounts for retransmissions due to channel errors, collisions, and MAC and PHY overheads that are not specified in the rate information. In other words, it represents the ratio of the actual over-the-air time that the scheduler should allocate for the transmission of MSDU units at the required rates to the time that would be necessary at the minimum PHY rate if there were no packet losses. As such, it must be greater than unity. It can be calculated once we know the maximum packet drop probability, $p_{drop}$, specified by the requesting mobile terminal, the packet loss probability over the wireless medium $p_l$, provided by the access point AP1 and the number of expected access attempts A within a specific time frame, which is the time period of a measurement window $T_W$ in this case. A procedure to perform this calculation is presented in the Annex H.3.2 of this document:

Draft Supplement to Standard for Telecommunications and Information Exchange Between Systems - LAN/MAN Specific Requirements - Part 11: Wireless Medium Access Control (MAC) and Physical Layer (PHY) specifications: Medium Access Control (MAC) Enhancements for Quality of Service (QoS), IEEE Standard 802.11e D0.8.
The IEEE 802.11e specification just mentioned also provides full detailed indications about the computation of the medium time parameter $T_M$.
The medium time parameter $T_M$ is computed by the admission controller AC and used in the CAC algorithm as estimation of the increase in utilization of the channel requested by the new flow $U_{add}$:

$$T_M \implies U_{add}$$

- An estimation of the current channel utilization $U_{curr}$ of the radio channel is built and maintained by the admission controller AC during the duration of a measurement window $T_W$. This is done by combining the measured channel utilization $U_{meas}$ at the end of the previous measurement window as provided by the access point AP1 with the sum of the additional channel utilization $U_{add}$ consumed by each newly admitted flow. The duration of the past measurement window $T_w$ is also required for this estimation.

At the beginning of a new measurement window, the admission controller AC sets the value of the current channel utilization $U_{curr}$ to the value of the measured channel utilization $U_{meas}$ provided by the access point AP1. At that time, the current channel utilization $U_{curr}$ reflects precisely the current state of the radio channel. For each during the current measurement window newly accepted flow, the admission controller AC computes the increase in utilization of the channel by the new flow $U_{add}$ and updates $U_{curr}$ in order to take into account the new active flow. The current channel utilization $U_{curr}$ can be computed in the following way:

$$U_{curr} + U_{add} \implies U_{curr}$$

At the end of a measurement window, $U_{curr}$ is refreshed to the new measured channel utilization $U_{meas}$ provided by the access point AP1, and the whole process restarts.

The next section details the proposed CAC algorithm CALG. It massively uses the metrics defined in the previous sections.

The basic principle of the CAC algorithm CALG is the following: The admission controller AC builds and maintains the estimation of the current channel utilization $U_{curr}$ and uses it to check whether the resources needed for the increase in utilization of the channel by the new flow $U_{add}$ are available or not.

The CAC algorithm CALG is executed by the admission controller whenever an ADDTS request message is received, i.e. the reception of such an ADDTS request message acts as a triggering event. The CAC algorithm CALG takes the following metrics as input:

- The current channel utilization $U_{curr}$ maintained by the admission controller AC, as detailed in the previous section.

- The increase in utilization of the channel requested by the new flow $U_{add}$ computed by the admission controller AC by means of the TSPEC element, as detailed in the previous section.

Given these input data, the admission controller AC computes the new (theoretical) channel utilization $U_{new}$ that it would have if the new flow was admitted:

$$U_{new} = U_{curr} + U_{add}$$

Once the new channel utilization $U_{new}$ is calculated, the admission controller AC can take its admission decision by checking if the new channel utilization $U_{new}$ does not exceed a given threshold, the target channel utilization $U_{target}$. The target channel utilization $U_{target}$ represents the target value of utilization that the admission controller AC wants to achieve within its controlled QBSS set.

The admission controller AC can take three possible decision: Accept the new flow and reserve the resources requested, reject it or initiate a renegotiation by proposing a less resource-consuming TSPEC element for the flow.

The admission controller AC will accept the admission of the new flow if:

$$U_{new} < U_{target}$$

In that case, the admission controller AC updates the current channel utilization $U_{curr}$ in order to take into account the newly accepted flow:

$$U_{curr} = U_{new}$$

In the ADDTS response message, the admission controller AC indicates as medium time parameter $T_M$ in the TSPEC element the increase in utilization of the channel requested by the new flow $U_{add}$ computed for the flow.

The admission controller AC will try to renegotiate the admission of the new flow with the mobile terminal STA2 if:

$$U_{new} > U_{target}$$

If there is a value of data rate R'$_r$ greater than or equal to the required minimum data rate $R_{min}$ of the new flow specified by the mobile terminal STA2, this value of data rate $R'_r$ can replace the mean data rate R$_r$ in the computation of the increase in utilization of the channel requested by the new flow $U_{add}$, i.e. in the computation of the medium time parameter $T_M$, if the following inequation is true:

$$U'_{new} < U_{target}$$

In this formula, $U'_{new}$ denotes the new channel utilization that has been derived by means of using the value of data rate $R'_r$ instead of the mean data rate R$_r$ in the computation of the increase in utilization of the channel requested by the new flow $U_{add}$.

During the renegotiation process, the current channel utilization $U_{curr}$ is not updated with the parameters of the requested flow, and the resources are not reserved.

The admission controller AC will reject the admission of the new flow for any mean data rate $R_r$ greater than or equal to the minimum data rate $R_{min}$ specified by the by the mobile terminal STA2, if:

$$U_{new} > U_{target}$$

Clearly, in case of rejection, the current channel utilization $U_{curr}$ is not updated with the parameters of the requested flow.

In a preferred embodiment, the described admission control mechanism is extended to a more realistic case, where multiple classes of traffic/service, i.e. multiple EDCA access categories are defined like e.g. Voice, Video, and Data. The main difference is that now the most important metrics must be measured/computed taking into account the different access categories.

In the following, the modifications requested in the definition of the useful parameters, as well as in the metrics measured by the access point AP1 and the ones computed by the admission controller AC are described. Also, the admission control decision must take into account the existence of the different EDCA access categories.

In the case of multiple classes of service, the static parameters evolve as follows:

- The maximum packet drop probability $p_{drop}$ rests unchanged w.r.t. its definition given in the basic embodiment, because it is a value that applies to the whole QBSS set and does not depend on the different classes of service.

- The target channel utilization $U_{t\,arget}^{ACi}$ depends on the access category ACi. When several classes of service, i.e. EDCA access categories, are defined, the admission controller decides by initial configuration how it wants to share the available bandwidth in its QBSS set among the different access categories. For example, it could choose to reserve 70% of the total available bandwidth to VoIP traffic (VoIP = Voice over Internet Protocol), 20% to video streaming traffic, and the rest (10%) for best-effort data traffic, like e.g. web-browsing. Obviously, the following relation describes the overall target channel utilization $U_{target}$:

$$\sum_{\{ACi\}} U_{t\,arg\,et}^{ACi} = U_{t\,arg\,et}$$

The measurements performed by the access point AP1 are also impacted by the presence of multiple classes of service:

- The packet loss probability per access category $p_l^{ACi}$ depends on the collision probability $p_c^{ACi}$ which in turns

depends on the minimum contention window size $CW_{min}^{ACi}$ . Since the contention window size differs between the different EDCA access categories, the collision probability also depends on the different EDCA access categories. Thus, it must be computed for each access category, using the corresponding $CW_{min}^{ACi}$ in the following way:

$$p_c^{ACi} = 1 - \left( 1 - \frac{1}{CW_{min}^{ACi}} \right)^{N-1}$$

Therefore, also the packet loss probability differs among the different EDCA access categories:

$$p_l^{ACi} = p_e + p_c^{ACi} - p_e p_c^{ACi}$$

- The access point AP1 needs to measure the channel utilization $U_{meas}^{ACi}$ per access category. This can be easily obtained by using the mechanisms defined in the IEEE 802.11k standard. In fact, the IEEE 802.11k draft standard specifically refers to QoS measurements for different EDCA access categories as described here:

    Section 11.7.7.6 of Draft Supplement to Standard for Telecommunication and Information Exchange between Systems - LAN/MAN Specific Requirements - Part 11: Wireless Medium Access Control (MAC) and Physical Layer (PHY) Specifications: Specification for Radio Resource Measurement, IEEE Standard 802.11k DO.8, December 2003.

    An alternative solution might be to resort to a Montecarlo approach, by selecting a subset of received/sent packets, e.g. about 15%-20% of the total packets, and perform the estimation on such reduced subset.
    In any case, the following relation must be respected by definition:

$$\sum_{\{ACi\}} U_{meas}^{ACi} = U_{meas}$$

Some of the metrics computed by the admission controller AC are impacted by the effect of prioritization among the different classes of service:

- The number of expected accesses A is not impacted by the presence of several EDCA access categories and its definition rests unchanged compared with the case of only one EDCA access category that is described above.

- The medium time parameter $T_M^{ACi}$ and therefore also the increase in utilization of the channel requested by the new flow $U_{add}^{ACi}$ depend on the access category Aci because the surplus bandwidth allowance is computed using the packet loss probability $p_l^{ACi}$ that is dependent on the access category ACi. The computation of the medium time parameter $T_M^{ACi}$ is straightforward.

- The current channel utilization $U_{curr}^{ACi}$ is estimated by the admission controller AC dependent on the access category Aci. The definition that follows is directly derived from the one described above, knowing that a to-be-admitted flow is always mapped on an access category ACi:

$$U_{curr}^{ACi} + U_{add}^{ACi} \Rightarrow U_{curr}^{ACi}$$

To extend the proposed solution for the CAC algorithm CALG to the case where several EDCA access categories are defined, the CAC algorithm CALG must take into account the traffic differentiation. To do so, the following redefined metrics must be used: The measured channel utilization $U_{meas}^{ACi}$ per access category from the access point AP1, the target channel utilization $U_{target}^{ACi}$ per access category, the medium time parameter $T_M^{ACi}$ per access category and the current channel utilization $U_{curr}^{ACi}$ per access category.

The CAC algorithm CALG can be easily derived from the basic case described above using the redefined metrics for the case of multiple access categories. The main idea is that now the admission controller AC performs admission control per EDCA access category, keeping an indication of the current channel utilization $U_{curr}^{ACi}$ for each access category ACi.

At the end of each measurement window, the access point AP1 provides to the admission controller AC the measured channel utilization $U_{meas}^{ACi}$, for each access category ACi.

When an ADDTS request message is received by the admission controller AC, the admission controller AC identifies to which access category ACi the new flow maps by means of the so-called TS Info field of the TSPEC element, and perform exactly the same process as described for the CAC algorithm CALG in case of only one access category ACi, now using the metrics for multiple access categories, i.e. the admission controller AC computes the new (theoretical) channel utilization $U_{new}^{ACi}$ that it would have if the new flow were admitted in the requested access category ACi according to the following formula:

$$U_{new}^{ACi} = U_{curr}^{ACi} + U_{add}^{ACi}$$

The admission controller AC can now take its decision by checking if the new (theoretical) channel utilization $U_{new}^{ACi}$ does not exceed the target channel utilization $U_{target}^{ACi}$ of the considered access category ACi. Similar to the basic case with only one access category ACi , the admission controller can accept, reject or renegotiate the flow.

The admission controller AC will accept the admission of the new flow if the following inequation is true:

$$U_{new}^{ACi} < U_{target}^{ACi}$$

In that case, the admission controller AC updates the corresponding current channel utilization $U_{curr}^{ACi}$ in the following way in order to take into account the newly accepted flow:

$$U_{curr}^{ACi} = U_{new}^{ACi}$$

In the ADDTS response message sent to the mobile terminal STA2, the admission controller AC indicates as medium time parameter $T_M^{ACi}$ in the TSPEC element the increase in utilization of the channel requested by the new flow $U_{add}^{ACi}$ computed for the flow.

The admission controller AC will try to renegotiate the admission of the new flow with the mobile terminal STA2 if:

$$U_{new}^{ACi} > U_{target}^{ACi}$$

If there is a value of data rate $R'_r$ greater than or equal to the required minimum data rate $R_{min}$ of the new flow specified by the mobile terminal STA2, this value of data rate $R'_r$ can replace the mean data rate $R_r$ in the computation of the increase in utilization of the channel requested by the new flow $U_{add}^{ACi}$, i.e. in the computation of the medium time parameter $T_M^{ACi}$ if the following inequation is true:

$$U'^{ACi}_{new} < U_{target}^{ACi}$$

In this formula, $U'^{ACi}_{new}$ denotes the new channel utilization that has been derived by means of using the value of data rate $R'_r$ instead of the mean data rate $R_r$ in the computation of the increase in utilization of the channel requested by the new flow $U_{add}^{ACi}$.

During the renegotiation process, the current channel utilization $U_{curr}^{ACi}$ is not updated with the parameters of the requested flow, and the resources are not reserved.

The admission controller AC will reject the admission of the new flow for any mean data rate $R_r$ greater than or equal to the minimum data rate $R_{min}$ specified by the by the mobile terminal STA2, if:

$$U_{new}^{ACi} > U_{target}^{ACi}$$

Clearly, in case of rejection, the current channel utilization $U_{curr}^{ACi}$ is not updated with the parameters of the requested flow.

**Claims**

1. A method for providing admission control for the admission of a mobile terminal (STA2) to a mobile network **characterized in, that** said admission control is based on at least one parameter (APP) that characterizes the radio channel that shall be used for a connection of the mobile terminal (STA2) to the mobile network and on at least one parameter (STAP) that characterizes the traffic flow of said connection.

2. A method according to claim 1, **characterized in, that** at least one of said at least one parameter (APP) that characterizes the radio channel is used to derive the radio channel utilization of said radio channel.

3. A method according to claim 1, **characterized in, that** at least one of said at least one parameter (APP) that characterizes the radio channel and at least one of said at least one parameter (STAP) that characterizes the traffic flow of said connection are used to derive the additional radio channel utilization caused by said traffic flow of said connection.

4. A method according to claim 3, **characterized in, that** said admission control is based on a comparison of the sum of said radio channel utilization and said additional radio channel utilization with a target channel utilization.

5. A method according to claim 1, 2, 3 or 4, **characterized in, that** the at least one parameter (APP) that characterizes the radio channel, the at least one parameter (STAP) that characterizes the traffic flow of said connection, the radio channel utilization and/or the additional radio channel utilization are given or derived for different classes of traffic.

6. An admission controller (AC) for providing admission control for the admission of a mobile terminal (STA2) to a mobile network, **characterized in, that** the admission controller (AC) comprises means for receiving admission requests for the admission of the mobile terminal (STA2) to the mobile network, for receiving parameters (APP) that characterize the radio channel that shall be used for a connection of the mobile terminal (STA2) to the mobile network, for receiving parameters (STAP) that characterize the traffic flow of said connection, for controlling the admission based on at least one of said parameters (APP) that characterize the radio channel that shall be used for a connection of the mobile terminal (STA2) to the mobile network and on at least one of said parameters (STAP) that characterize the traffic flow of said connection and for sending a response concerning the admission request towards the mobile terminal (STA2).

7. An admission controller (AC) according to claim 6, **characterized in, that** said admission controller (AC) is colocated with an access point (AP1) of the mobile network.

8. A communication system comprising at least one mobile terminal (STA2) and at least one access point (AP1) **characterized in, that** said communication system comprises at least one admission controller (AC) according to claim 6.

Fig. 1

Fig. 2

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 079 650 A (NORTEL NETWORKS LIMITED) 28 February 2001 (2001-02-28) * paragraph [0006] - paragraph [0009] * * paragraph [0020] - paragraph [0025] * ----- | 1-8 | H04Q7/38 H04L12/28 |
| X | EP 1 244 318 A (SIEMENS AKTIENGESELLSCHAFT) 25 September 2002 (2002-09-25) * paragraph [0004] - paragraph [0007] * * paragraph [0026] - paragraph [0028] * ----- | 1-8 | |

TECHNICAL FIELDS SEARCHED (IPC)

H04Q
H04L

The present search report has been drawn up for all claims

| Place of search | Date of completion of the search | Examiner |
|---|---|---|
| Berlin | 8 November 2005 | LOPEZ PEREZ M C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 29 0415

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2005

| Patent document cited in search report | | Publication date | Patent family member(s) | | Publication date |
|---|---|---|---|---|---|
| EP 1079650 | A | 28-02-2001 | CA | 2308572 A1 | 26-02-2001 |
| | | | US | 6944125 B1 | 13-09-2005 |
| EP 1244318 | A | 25-09-2002 | AT | 296017 T | 15-06-2005 |
| | | | DE | 60110892 D1 | 23-06-2005 |
| | | | DE | 60110892 T2 | 20-10-2005 |
| | | | WO | 02076129 A2 | 26-09-2002 |
| | | | ES | 2240265 T3 | 16-10-2005 |

EPO FORM P0459

For more details about this annex : see Official Journal of the European Patent Office, No. 12/82